# EUROPÄISCHE PATENTSCHRIFT

(11) **EP 0 408 091 B1**
(45) Veröffentlichungstag und Bekanntmachung des Hinweises auf die Patenterteilung: **19.05.1993**
(21) Anmeldenummer: 90117572.9
(22) Anmeldetag: 05.09.1988
(51) Int. Cl.: E04C 3/42, E04B 1/26, E04C 3/38

(54) **Verbindungselement**
Connecting element
Elément de liaison

(30) Priorität: 04.11.1987 AT 2916/87
(43) Veröffentlichungstag der Anmeldung: 16.01.1991
(62) Teilanmeldung aus: 88890228.5
(73) Patentinhaber: Wolf Systembau Gesellschaft m.b.H. KG, A-4644 Scharnstein (Oberösterreich) (AT)
(72) Erfinder: Wolf, Johann, A-4644 Scharnstein, Oberösterreich (AT)
(74) Vertreter: Beer, Manfred, Dipl.-Ing.

(56) Entgegenhaltungen:
- FR-A- 1 216 476
- GB-A- 685 575
- SU-A- 734 356
- US-A- 2 776 457

## Beschreibung

Die Erfindung bezieht sich auf ein Verbindungselement für Stützen aus Holzbalken mit Dachriegeln, wobei die Holzbalken und die Dachriegel aufeinander zulaufende (konvergierende) Seitenflächen aufweisen, zur Errichtung von Hallenbauten u.dgl..

Ein derartiges Verbindungselement ist der US-A-2 776 457 zu entnehmen, wobei angestrebt wird, Einzelteile aus Holz für Bauwerke großer Abmessungen fabrikmäßig fertigen, diese sodann zu einer Baustelle befördern und dort zusammenbauen zu können.

Aus der US-A-2 796 642 (C.H. Woodworth) ist eine Stütz- Dachriegel-Verbindung bekannt, bei der eine Stütze, die konvergierende Seitenflächen aufweist, mit einem gleichförmigen Dachriegel durch eine abgewinkelte, außen aufgeschraubte Stahlschiene verbunden ist. Die Enden der Balken sind entsprechend der Dachneigung schräg geschnitten und liegen mit den Enden (Stirnflächen) zur Vermeidung der Aufsplitterung an einer beweglichen und damit an die Schnittflächen anpaßbaren Stahlplatte auf, die mit Widerlager zur Aufnahme des Druckes versehen ist. Dabei können die Balken zusätzlich an der Innenseite mit schraubbaren kurzen Schenkeln, die mit den Widerlagern fest verbunden sind, gesichert werden.

Eine weitere Knotenausbildung ist aus der US-A-3 099 468 (C.E. Meyerdick) bekannt. Diese ist jedoch für runde oder rechteckige Balken gedacht. Die Balken müssen zudem weitgehend maßgenau sein, da lediglich die äußeren Enden der äußeren Einfassung anpreßbar sind. Der Knoten weist keine Trennung der beiden Anschlüsse auf, so daß die Montage auf der Baustelle sehr erschwert ist.

Ausgehend von diesem bekannten Stand der Technik besteht die Aufgabe der Erfindung darin, Balken bzw. daraus gefertigte Verbundträger, die konvergierende Seitenflächen aufweisen, und Dachriegel, die konvergierende Seitenflächen aufweisen, mit anpaßbaren Elementen, auf der Baustelle einfach montierbar auszubilden und den Verbindungsknoten so zu gestalten, daß dieser dem Lastverlauf konform ist.

Zur Lösung dieser Aufgabe ist erfindungsgemäß ein Verbindungselement zur Verbindung von Stützen mit aus Holz bestehenden Dachriegeln vorgesehen, das sich dadurch auszeichnet, daß für das Ende der Stütze und das Ende des Dachriegels je ein Teilelement vorgesehen ist, wobei jedes Teilelement aus mit der Stütze bzw. dem Dachriegel außen und innen befestigbaren Stahlbändern besteht und daß die einander gegenüberliegenden Stahlbänder durch Flanschen miteinander verbunden sind, die seitlich sowie außen und innen über die Stütze und den Dachriegel überstehen und daß die innenliegenden Stahlbänder gegenüber den Flanschen durch Knotenbleche ausgesteift sind.

In einer Ausführungsform der Erfindung sind am äußeren Bereich der Flanschen zur Aussteifung Flansche angeordnet, wobei zur Aufnahme von Schrauben in diesen Flanschen Schraublöcher und in jenen Flanschen Langlöcher vorgesehen sind.

Schließlich können bei der Erfindung die Stahlbänder mit den Flanschen sowie den Knotenblechen durch Montageschweißung zu je einem einstückigen Teilelement ausgebildet sein.

Weitere Einzelheiten der Erfindung sind der anschließenden Beschreibung zu entnehmen, in der auf die Zeichnung Bezug genommen wird, in der ein Ausführungsbeispiel des erfindungsgemäßen Verbindungselementes schematisch veranschaulicht ist. Es zeigt
Fig. 1 eine Seitenansicht eines Verbindungselementes und
Fig. 2 einen Querschnitt durch eine Stütze.

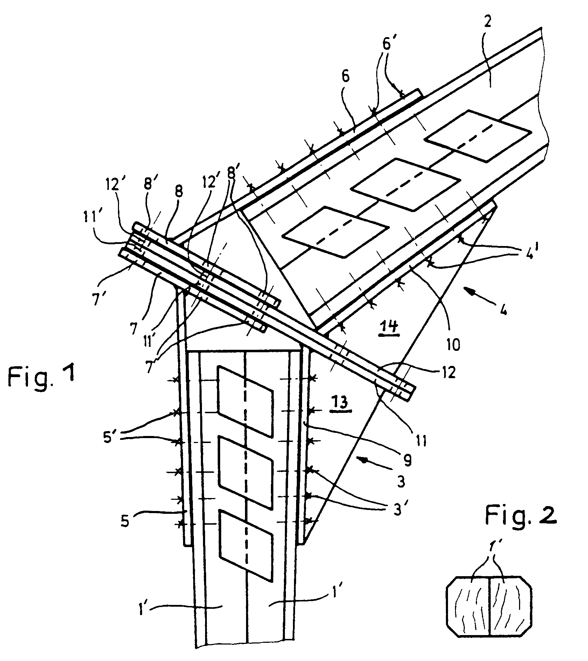

In Fig. 1 ist ein Verbindungselement einer Stütze 1' mit einem Verbund-Dachriegel mit konvergierenden Seitenflächen 2 dargestellt.

Die Stütze ist als eine Verbundstütze 1' mit einem Verbund-Dachriegel 2 dargestellt, die beide aus Holzbalken bestehen, die aufeinander zulaufende Seitenflächen aufweisen. Entsprechend dem Lastverlauf sind an den stärkeren Enden der Stützen 1' und Dachriegel 2 Teilelemente 3 und 4 vorgesehen, die aus an den Außen- und Innenseiten der Stütze und des Dachriegels anliegenden Stahlbändern 5, 9 und 6, 10 bestehen und die an den Stützen 1' und an den Dachriegeln 2 aufgeschraubt (Schrauben 3', 4' und 5', 6') sind. Die außen anliegenden Stahlbänder 5 und 6 sind jeweils mit kurzen Flanschen 7 und 8 verbunden, die entsprechend der Verbindungsebene geneigt sind und mehrere Schraublöcher 7' und 8' aufweisen. Die innen liegenden Stahlbänder 9 und 10 sind mit langen, die Stützen 1' und die Dachriegel 2 übergreifenden Flanschen 11 und 12 fest verbunden, wobei der Übergriff an der Innenseite deutlich größer ist als außen. Zwischen den Stahlbändern 9 und 10 und den übergreifenden Teilen der Flanschen 11 und 12 sind je ein oder mehrere Knotenbleche 13, 14 eingeschweißt. Die Knotenbleche 13, 14 können auch U- oder I-förmig ausgebildet sein. Entsprechend der angenommenen oder zu erwartenden Last kann der innere Knoten entsprechend lang und kräftig gestaltet werden, wobei eine feste Einspannung der Balken, eine optimale Abstützung und eine weitgehende Vormontage gewährleistet ist.

Die den kurzen Flanschen 7 und 8 entsprechenden Langlöcher 7', 8' sind in den langen Flanschen 11 und 12 als Schraublöcher 11', 12' ausgebildet, um Differenzen in den Balkenstärken ausgleichen zu können.

Die geschilderte Ausbildung hat den Vorteil, daß die Stahlbänder 5, 6, 9 und 10 auf der ganzen Länge satt anliegend aufschraubbar sind und somit eine feste Einspannung der Trägerenden erreicht wird. Ferner kann der innere Teil des Knotens entsprechend der zu erwartenden Belastung ausgelegt werden. Durch weitgehende Vormontage wird die Arbeit auf der Baustelle sehr wesentlich vereinfacht.

Alternativ - insbesondere in Fällen geringer Belastung - können die Verbindungselemente auch so ausgebildet sein, daß die kurzen Flansche 7, 8 an der Innenseite des Knotens liegen und mit den Knotenblechen 13, 14 einen einteiligen Schweiß- oder Gußkörper bilden.

In Fällen, wo geringe Holzstärken und damit auch geringe Maßabweichungen zu erwarten sind, beispielsweise bei Hallen geringer Spannweite, wie Bootshäuser od. dgl., können die außen- und innenliegenden Stahlbänder mit einem gemeinsamen Flansch verbunden sein, d.h. als einstückiges Verbindungselement ausgeführt sein. Das Einlegen der Stützen und Dachriegel in die durch die beiden Stahlbänder gabelförmige Verbindung wird durch die aufeinander zulaufenden Seitenflächen der Balken erleichtert und eine satte Anlage ist damit ebenfalls zu erreichen. Im Rahmen der Erfindung können die Holzbalken der Stützen und der Dachriegel mit je zwei einander gegenüberliegenden, aufeinander zulaufenden Seitenflächen, aber auch an vier Seitenflächen konvergierend ausgebildet sein.

## Patentansprüche

1. Verbindungselement für Stützen aus Holzbalken mit Dachriegeln, wobei die Holzbalken und die Dachriegel aufeinander zulaufende (konvergierende) Seitenflächen aufweisen, zur Errichtung von Hallenbauten u. dgl., dadurch gekennzeichnet, daß für das Ende der Stütze (1') und das Ende des Dachriegels (2) je ein Teilelement (3, 4) vorgesehen ist, wobei jedes Teilelement aus mit der Stütze (1') bzw. dem Dachriegel (2) außen und innen befestigbaren Stahlbändern (5, 9 und 6, 10) besteht, und daß die einander gegenüberliegenden Stahlbänder (5, 9 und 6, 10) durch Flanschen (11, 12) miteinander verbunden sind, die seitlich sowie außen und innen über die Stütze (1') und den Dachriegel (2) überstehen und daß die innenliegenden Stahlbänder (9, 10) gegenüber den Flanschen (11, 12) durch Knotenbleche (13, 14) ausgesteift sind.

2. Verbindungselement nach Anspruch 1, dadurch gekennzeichnet, daß am äußeren Bereich der Flanschen (11, 12) zur Aussteifung Flansche (7, 8) angeordnet sind, wobei zur Aufnahme von Schrauben in diesen Flanschen (7, 8) Langlöcher (7', 8') und in jenen Flanschen (11, 12) Schraublöcher (11', 12') vorgesehen sind.

3. Verbindungselement nach Anspruch 1 oder 2, dadurch gekennzeichnet, daß die Stahlbänder (5, 6; 9, 10) mit den Flanschen (11, 12) sowie den Knotenblechen (13, 14) durch Montageschweißung zu je einem einstückigen Teilelement (3, 4) ausgebildet sind.

## Claims

1. Connecting member for posts comprising wooden beams with roof bolts, the wooden beams and roof bolts having side surfaces tapering (converging) towards one another, for erecting hall structures and the like, characterised in that a part member (3, 4) is provided in each case for the end of the post (1') and for the end of the roof bolt (2), each part member comprising steel straps (5, 9 and 6, 10) attachable internally and externally to the post (1') or to the roof bolt (2), and in that the mutually-opposed steel straps (5, 9 and 6, 10) are interconnected by flanges (11, 12) which overlap laterally, both externally and internally, the post (1') and the roof bolt (2), and in that the internally-disposed steel straps (9, 10) are reinforced opposite the flanges (11, 12) by corner plates (13, 14).

2. Connecting member according to claim 1, characterised in that there are disposed on the external region of the flanges (11, 12) for reinforcement purposes flanges (7, 8), slots (7', 8') being provided in the flanges (7, 8), and screw-holes (11', 12') in the flanges (11, 12), in order to accommodate screws.

3. Connecting member according to claim 1 or 2, characterised in that the steel straps (5, 6; 9, 10), the flanges (11, 12) and the corner plates (13, 14) are assembled by welding to form one integral part member (3, 4).

## Revendications

1. Elément d'assemblage destiné à l'assemblage de poutres de toit avec des poteaux formés de poutres en bois, les poteaux et les poutres comportant des faces latérales qui convergent l'une vers l'autre, en vue de l'édification de halles et analogues, caractérisé par le fait qu'il est prévu à l'extrémité du poteau (1') et à l'extrémité de la poutre de toit (2) respectivement un élément (3, 4), chaque élément étant constitué de bandes d'acier (5, 9 et 6, 10) qui se fixent côté extérieur et côté intérieur sur le poteau (1') et sur la poutre (2), par le fait que les bandes d'acier (5, 9 et 6, 10) en vis-à-vis sont reliées entre elles par des platines (11, 12) qui débordent latéralement ainsi que vers l'extérieur et vers l'intérieur par rapport au poteau (1') et à la poutre (2) et par le fait que des goussets (13, 14) rigidifient par rapport aux platines (11, 12) les bandes d'acier (9, 10) situées côté intérieur.

2. Elément d'assemblage selon la revendication 1, caractérisé par le fait que des plaques (7, 8) sont appliquées à des fins de rigidification sur la partie extérieure des platines (11, 12), des trous oblongs (7', 8') et des trous (11', 12') destinés à recevoir des vis étant prévus respectivement dans lesdites plaques (7, 8) et dans les platines (11, 12).

3. Elément d'assemblage selon la revendication 1 ou 2, caractérisé par le fait que les bandes d'acier (5, 6; 9, 10), les platines (11, 12) et les goussets (13, 14) sont assemblés par soudage pour former un élément (3, 4) monobloc.
